Europäisches Patentamt

European Patent Office

Office européen des brevets

(11) Publication number: **0 051 410**
**A2**

(12) # EUROPEAN PATENT APPLICATION

(21) Application number: 81305014.3

(22) Date of filing: 23.10.81

(51) Int. Cl.³: **B 62 B 3/10**

(30) Priority: 04.11.80 GB 8035438

(43) Date of publication of application:
12.05.82 Bulletin 82/19

(84) Designated Contracting States:
BE DE FR IT LU NL

(71) Applicant: CLARES LIMITED
Parkwood Estate, Wells
Somerset BA5 IUT(GB)

(72) Inventor: Baumber, John Terence
28 Holme Oaks Burleigh
Glastonbury Somerset BA6 8UB(GB)

(72) Inventor: Lazaro, Bryan Winston Francis
22 Woodbury Close Wells
Somerset BA5 2XS(GB)

(74) Representative: Jenkins, Richard Gray et al,
R.G.C. Jenkins & Co. Chancery House 53-64 Chancery
Lane
London, WC2A 1QU(GB)

(54) Wire containers and methods of making them.

(57) A trolley basket is produced by forming a blank (10) in which two arrays (12, 14) of wires (16) extending generally transversely of one another are interconnected to define a base panel (18), in which the two arrays (12, 14) respectively define wall panels (24) joined to the base panel (18) and in which each wall panel (24) is provided with a reinforcing member (20, 26) extending transversely of the wires (16) in the associated array. Each wall panel (24) is bent about a line defining a respective edge of the base panel (18) to bring the reinforcing members (20, 26) into end-to-end relation. Then, the ends of the reinforcing members (20, 26) are joined together.

Fig. 1.

EP 0 051 410 A2

## WIRE CONTAINERS AND METHODS OF MAKING THEM

This invention relates to wire containers and methods of making them. More particularly, the invention concerns the production and construction of supermarket trolleys.

In general, it has been the practice to manufacture supermarket trolley baskets by forming a blank in which a first array of generally parallel wires is joined to a second transverse, array of generally parallel wires in a generally rectangular region where the two arrays cross one another to define a base panel, which subsequently forms the base of the final basket; and in which extensions of the wires on three sides of the base panel form wall panels, which ultimately provide the side and front walls of the trolley. After the blank is formed, the wires in the two opposed wall panels are splayed and the wires in all the wall panels are bent through approximately $90^{\circ}$ relative to the base panel. Next, continuous binding wires, each extending about all three wall panels, are joined by welding to the wires in these to hold the wall panels together and to locate the wires in the desired spaced relation. A U-shaped back frame is secured by welding to these binding wires and the base panel and is braced by a cross bar which extends between the free ends of its limbs at corners of the opposed wall panels remote from the base panel.

The process of bending the wires in the wall panels relative to the base panel and subsequently binding them with a continuous binding wire is both time consuming and labour intensive and tends to result in a trolley which is less robust than is desirable because the corners of the trolley, which, in use, are the regions most prone to impact and consequential damage, are defined merely by angles in the binding wires.

It is, therefore, an object of the present invention to facilitate the manufacture of wire supermarket trolley baskets by providing a method of production in which the binding of the wall panels of the basket with a continuous binding wire is avoided.

Another object of the invention, at least in its preferred form, is to provide such a method of manufacturing a supermarket trolley basket in which the wires in each wall panel are connected together by bracing struts prior to the bending of the wall panels relative to the base panel.

The invention may also provide a more robust supermarket trolley basket  than the trolley basket described above.

Generally, the invention concerns a method of producing a wire trolley basket in which adjacent sections of a partially formed basket are fixed relative to one another by creating respective and independent joins between their adjacent regions.

That is, the joins are made separately, whether simultaneously or not, by contrast with the known method in which a single continuous binding action serves to fix the basket walls in their relative positions.

The invention, as described below, features the steps of forming a blank comprising interconnected wires, deforming the blank into the shape of the trolley basket, and fixing the deformed blank in this shape by independently securing together end regions of elongated members in adjacent sections of the blank.

More particularly, the method may  comprise forming a blank in which two arrays of wires extending generally transversely of one another are interconnected to define a base panel, in which the two arrays respectively define wall panels joined to the base panel and in which each wall panel is provided with a bracing strut extending transversely of the wires in the associated array, bending each wall panel about a line defining a respective edge of the base panel to bring the bracing struts into end-to-end relation, and joining the ends of the bracing struts together.

By providing the wall panels with the bracing struts and joining the ends of these to one another, for example by welding, to hold the wall panels together, the need for continuous binding wires is avoided. Further, since the bracing struts may be secured to the wires in the wall panels when the blank is in a flat condition and since the only joining step which is then required once the wall panels have been bent at an angle to the base panel is to secure the ends of the bracing struts to each other, the manufacture of the container is simplified relative to the process described above. Less labour is needed to secure the wall panels to each other and, as a result, containers, such as trolleys, may be produced at a faster rate.

In addition, a more robust construction can be achieved for the final product than was usual when continuous binding wires were employed.

Another aspect of the invention, therefore, features the trolley basket itself.

This trolley basket may comprise a
base panel in which two transversely extending arrays
of wires are interconnected, and a plurality of
wall panels which are angled relative to the base or
bottom panel and which are formed from extensions
of the wires in the base panel, the wall panels being
provided with transverse bracing struts whose
ends abut and are joined to one another to hold the
wall panels together.

In a preferred form of the invention,
the trolley basket has three wall panels,
and a continuous quadrilateral back frame is secured
to free edges of an opposed pair of the wall panels
and the base panel.     This serves to give the
trolley rigidity and improves the strength of the
trolley by comparison with previous trolleys in
which the back frame was not continuous but was in
two parts, namely the U-shaped part and straight
bar adjoining the free ends of the U-shaped part.

Preferably, the trolley basket is also formed with a continuous generally U-shaped top frame which is secured to free edges of the three wall panels and whose free ends provide a mounting for a handle of the trolley.

The invention thus also provides a trolley basket comprising a base panel in which two transversely extending arrays of wires are interconnected, three wall panels angled relative to the base panel are formed from extensions of the wires in the base panel, means holding the wall panels together, and a continuous quadrilateral back frame secured to free edges of an opposed pair of the wall panels and the base panel.

And, in addition, the invention provides a trolley basket comprising a base panel in which two transversely extending arrays of wires are interconnected, a plurality of wall panels angled relative to the base panel and formed from extensions of the wires in the base panel, means holding the wall panels together, a continuous generally U-shaped top frame secured to free edges of the wall panels, and means to mount a handle between free ends of the top frame.

The invention is described further, by way of example, with reference to the accompanying drawings in which:

Figure 1 is a plan view of a blank for use in the method according to the invention;

figure 2 is a perspective view of the blank folded during the production of a trolley by this method;

figure 3 is a side view of the finished trolley; and

figure 4 is a perspective view of the trolley showing its continuous back frame and continuous top frame.

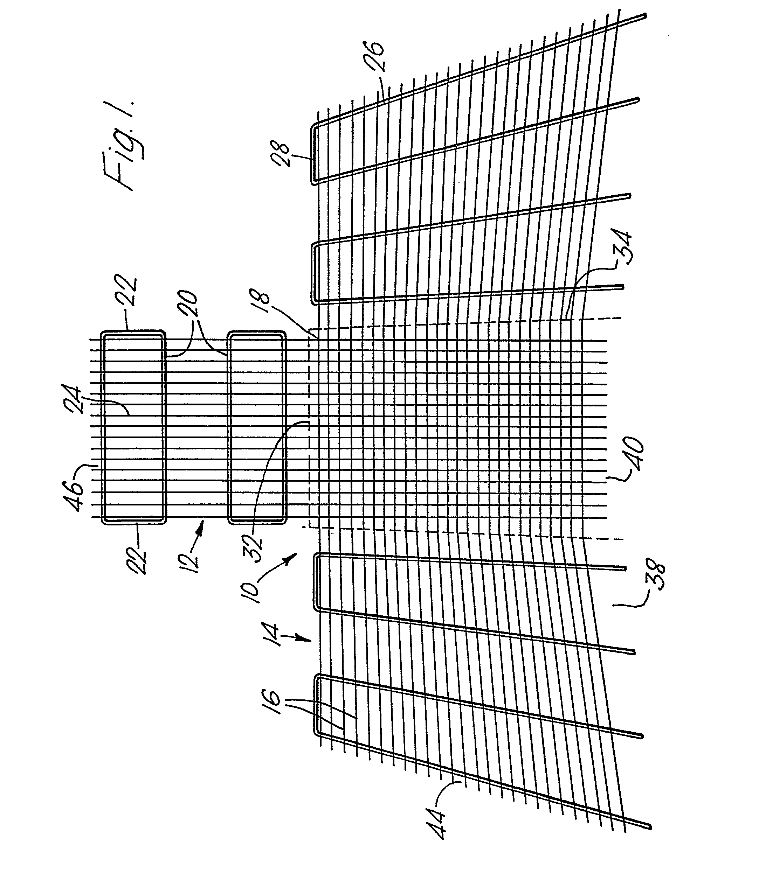

Referring firstly to figure 1, this shows a wire blank 10 formed from two, transversely extending, arrays 12, 14 of wires 16. The two arrays cross one another in a trapezoidal, or generally rectangular, region and in this region the wires are interconnected as by welding to define a base panel 18.

The wires in the array 12 extend from the base panel on one side only and are arranged in spaced parallel relationship. The wires in the array 14, on the other hand, extend on two, opposed, sides of the base panel 18 and although they are initially in spaced parallel relationship when the base panel is formed, they are subsequently splayed on each side of the base panel as shown in figure 1.

Each of the extensions from the base panel is provided with a pair of bracing struts to define a respective wall panel. The extension presented by the array 12 has two bracing struts 20 which comprise rods bent and welded into continuous rectangular bracing frames having opposed ends 22 arranged at the side edges of the resulting wall panel 24. The opposed extensions presented by the arrays 14 each have two bracing struts 26 in the form of rods bent into U's whose cross members 28 are arranged at respective side edges of the resulting wall panels 30. In the case of the wall panels 30, the bracing struts 26 are, of course, secured to the wires in the array 14 after these have been splayed.

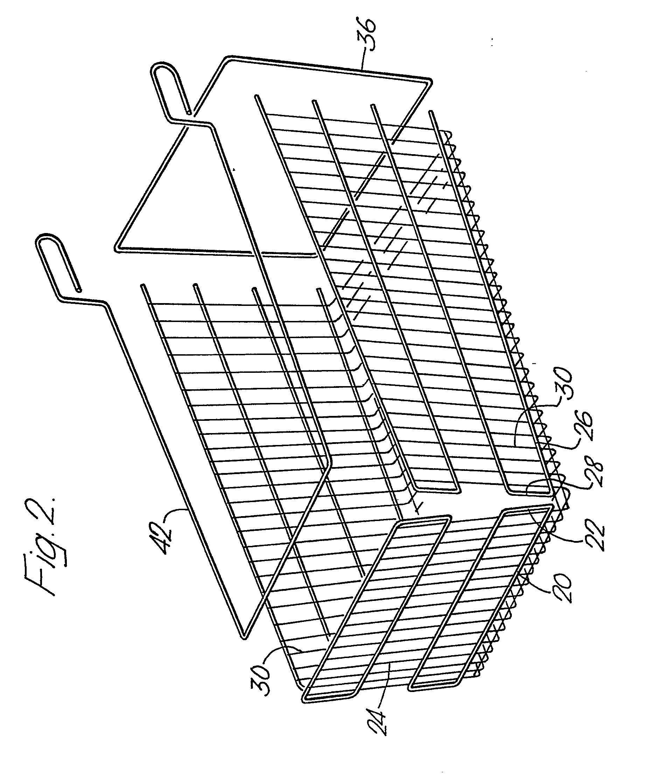

In order to form the blank illustrated in figure 1 into a trolley, the wall panels 24, 30 are bent respectively through approximately 90° about lines 32, 34 defining edges of the base panel 18 (see figures 2). This brings the bracing struts of the three wall panels into end-to-end relation with the cross members 28 of the struts 26 abutting against the ends 22 of the struts 20. The ends 22 are now joined to the members 28, for example by welding, in order to secure the wall panels together in their upright condition. It is alternatively possible to bring the struts into an end-to-end relation in which they do not abut one another but are slightly spaced from each other, and to join them together by welding corner pieces between the relevant pairs of struts.

Following this, a continuous quadrilateral back frame 36 in the form of a trapezium is joined to respective free edges 38 of the two wall panels 30 and to the free edge 40 of the base panel 18. In this instance, the back frame 36 is welded to the free ends of the bracing struts 26 and to the ends of the wires on the array 12 remote from the wall panel 24. The back frame 36 defines an open back to the trolley in which a pivotable back panel (not shown) is subsequently mounted.

A continuous generally U-shaped top frame 42 is attached, again by welding, to the remaining free edges 44 of the two wall panels 30 and to the free edge 46 of the wall panel 24. The free ends of the top frame 42 are disposed to project rearwardly of the back frame 36 and provide a mounting for a trolley handle 48.

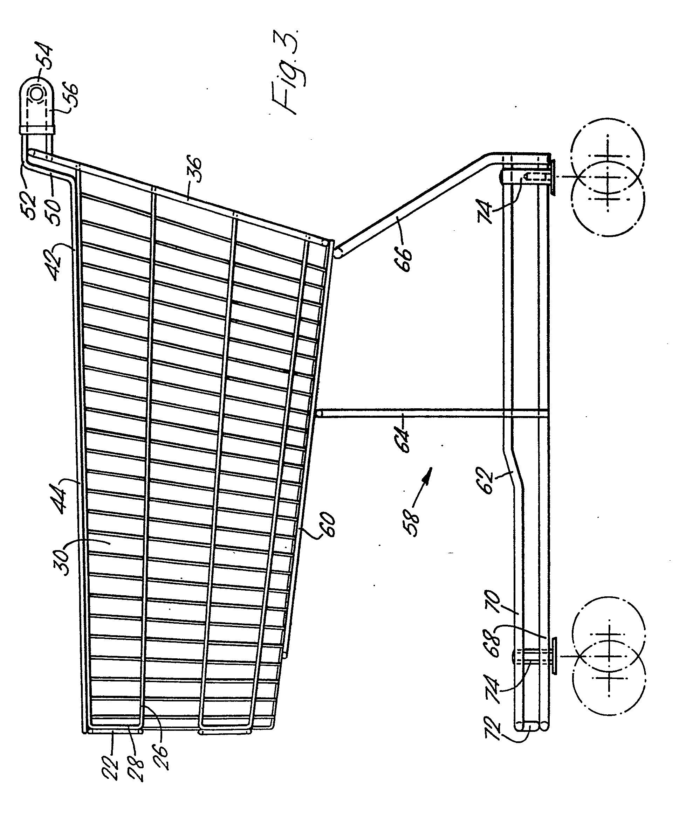

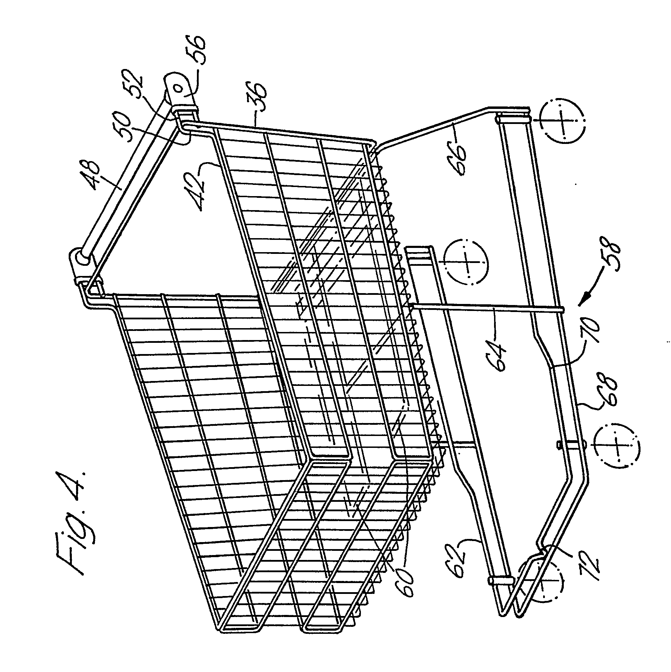

As shown in figures 3 and 4, the back frame projects upwardly from the base panel 18 slightly further than the wall panels 30. The free ends of the top frame 42 are bent upwardly slightly forwardly of the back frame 36 and then rearwardly thus providing a kink 50 in each such free end and enabling a portion 52 of that end to be supported on the back frame 36. The portion 52 of each free end continuing rearwardly of the back frame 36 is bent back on itself to create an ear 54 which provides the mounting for a respective end of the handle 48. Once the handle has been attached to each ear 54, a protective sleeve 56 is fitted over it.

The basket portion of the trolley thus formed is tapered slightly from the back to the front to allow for nesting of the trolleys in a supermarket when not in use. It is mounted on a wheeled base 58 in a conventional manner, the base 58 comprising a pair of arms 60 mounted above a chassis 62 by way of a first U-shaped support 64 and a second U-shaped support 66.

More particularly, the base 58 is constructed as follows: The chassis 62, which is generally U-shaped and tapers forwardly from the free ends of its limbs for nesting purposes, is formed by welding a first U-shaped bar 68 to a second such bar 70 at a kink 72 in the central region of the cross member of the bar 70 and by welding to both bars four internally threaded stub shafts 74 for receiving threaded spigots on the wheel mountings (not shown). The stub shafts 74 are each provided with an axially extending flat surface, this surface being welded to the bars 68, 70 to provide a strong connection. The supports 64,66 are then welded to the chassis 62 with this lying between the free ends of their limbs and with their cross members arranged to receive the arms 60 at a slight angle relative to the chassis, again to permit nesting. The arms 60, which comprise U-shaped rods, are joined by welding to the supports 62, 64 and have the free ends of their limbs at the back of the trolley. The base, thus constructed, receives the basket portion with the base panel 18 resting on and welded to the arms 60

The trolley produced in this manner is easy to construct and robust. The front corners of the trolley are strong since the bracing struts 20, 26 are joined along lines rather than merely by point connections. The back frame 36 and top frame 42 further enhance the rigidity of the trolley, the back frame being continuous and thus not prone to giving way at its upper corners when downwards pressure is applied to the handle 48, and the top frame 42 being arranged so that the load on the handle is distributed not only downwardly through the back frame but also through all the upright wires in the wall panels 24, 30.

Furthermore, the use of the bracing struts 20,26 and the simple construction of the back frame 36 and top frame 42 enable the trolley to be produced in a simple manner and at a high rate of production.

CLAIMS:

1. A method of producing a trolley basket including the steps of interconnecting wires (16) to form a blank (10), deforming said blank (10) to form said wires (16) into the shape of a trolley basket, and fixing said wires (16) in said shape, characterised by providing the blank (10) with a plurality of elongate reinforcing members (20, 26) and, in order to fix the wires (16) in the shape of the trolley basket, securing together end regions (22, 28) of the elongate reinforcing members (20, 26).

2. A method as claimed in claim 1, further comprising forming the blank (10) by joining a first array (12) of the wires to second, generally transverse, array (14) of the wires to define a base panel (18) and wall panels (24) extending from the base panel, characterised by joining the reinforcing members (20,26) to the wall panels (24) extending from the base panel (18).

3. A method as claimed in claim 1 or 2, characterised further by bending rods to create each of the reinforcing members (20, 26), and providing the reinforcing members with U-shaped end regions.

4. A method as claimed in claim 3, characterised by welding the end regions to each other for securing them together.

5. A method as claimed in claim 3, characterised by securing corner pieces between the end regions for securing them together.

6. A method as claimed in claim 2, further characterised by securing a continuous quadrilateral back frame (36) to free edges of an opposed pair of the wall panels (24) and the base panel (18) after deforming at least these parts of the blank (10) into the shape of the basket so as to define the back of the basket.

7. A method as claimed in claim 2 or 6, further characterised by securing a continuous generally U-shaped frame (42) to upper free edges of the wall panels (24) after deforming the blank (10) into the shape of the basket, and mounting a handle (48) between free ends of the generally U-shaped frame, the generally U-shaped frame defining the top of the basket.

8. A trolley basket having a base panel (18) in which two transversely extending arrays (12, 14) of wires (16) are interconnected, and a plurality of wall panels (24) which are angled relative to the base panel (18) and which are formed from extensions of the wires (16) in the base panel (18), characterised in that the wall panels (24) are provided with elongate reinforcing members (20, 26) and in that the trolley basket has means securing end regions (22, 28) of the reinforcing members together.

9. A basket as claimed in claim 8, characterised in that the reinforcing members (20, 26) comprise bent rods and in that the end regions (22, 28) are generally U-shaped.

10. A basket as claimed in claim 8 or 9, characterised in that the securing means are welds.

11. A basket as claimed in claim 8 or 9, characterised in that the securing means comprise connection members.

0051410

12. A basket as claimed in claim 8, further characterised by a continuous quadrilateral back frame (36) secured to two of the wall panels (24) and the base panel (18).

13. A basket as claimed in claim 8, further characterised by a continuous generally U-shaped top frame (42) having a handle (48) mounted between its free ends.

14. A basket as claimed in claim 13, characterised by the free ends of the generally U-shaped top frame (42) being bent into ears, the handle (48) being mounted between the ears.

Fig. 1.

Fig.2.

Fig. 3.

Fig. 4.

48

50

52

42

56

36

60

62

64

66

72

68

70

58

4/4

0051410